# FASCICULE DE BREVET EUROPEEN

(11) **EP 3 618 995 B1**
(45) Date de publication et mention de la délivrance du brevet: **06.10.2021**
(21) Numéro de dépôt: 18728211.6
(22) Date de dépôt: 02.05.2018
(51) Int. Cl.: B23K 11/00, B23K 11/30

(54) **INSERT DESTINÉ À L'ASSEMBLAGE D'UNE PREMIÈRE PIÈCE ET D'UNE DEUXIÈME PIÈCE PAR SOUDAGE ÉLECTRIQUE PAR RÉSISTANCE, ET PROCÉDÉ D'ASSEMBLAGE UTILISANT CET INSERT**
EINSATZ ZUR MONTAGE EINES ERSTEN TEILS UND EINES ZWEITEN TEILS DURCH ELEKTRISCHES WIDERSTANDSSCHWEISSEN UND MONTAGEVERFAHREN MIT DIESEM EINSATZ
INSERT INTENDED FOR ASSEMBLING A FIRST PART AND A SECOND PART BY ELECTRIC RESISTANCE WELDING, AND ASSEMBLY METHOD USING THIS INSERT

(30) Priorité: 04.05.2017 FR 1753944
(43) Date de publication de la demande: 11.03.2020
(73) Titulaire: Grojean, Maxime, 55200 Commercy (FR)
(72) Inventeur: Grojean, Maxime, 55200 Commercy (FR)
(74) Mandataire: Germain Maureau
(86) Numéro de dépôt international: PCT/FR2018/051094
(87) Numéro de publication internationale: WO 2018/202999

(56) Documents cités:
- EP-A1- 3 026 273
- EP-A2- 1 691 087
- FR-A- 1 101 391
- US-A- 4 119 827
- US-A1- 2011 097 142

## Description

La présente invention concerne un insert destiné à l'assemblage de deux pièces ou plus par soudage électrique par résistance, ainsi qu'un procédé d'assemblage de ces deux pièces au moyen de cet insert.

Il est connu, notamment dans le domaine des transports terrestres ou aériens, de réaliser des assemblages multi-matériaux intégrant aussi bien des composants tels que l'acier, l'aluminium, le magnésium, que des composants en matériau composite, de type à matrice et renfort, ou plastique. Ces assemblages multi-matériaux répondent aux problématiques d'allègement des véhicules afin de réduire la consommation d'énergie ou améliorer le comportement dynamique du véhicule, de renforcement structurel afin de satisfaire aux exigences en matière de sécurité, ou encore de réduction du nombre de composants dans les véhicules.

Cependant, les assemblages multi-matériaux sont relativement difficiles à mettre en œuvre compte-tenu de la nature même de ces assemblages, nécessitant de fixer de manière aisée, économique, durable et robuste des pièces faites de matériaux aux propriétés différentes.

Il est connu de réaliser des assemblages multi-matériaux par exemple par collage. Cependant, cette solution implique généralement un temps de réticulation ou de séchage relativement important et peut aussi présenter l'inconvénient d'une altération des performances de l'assemblage sous l'effet du vieillissement, si bien que son application reste limitée à des cas bien spécifiques.

Il est également connu de réaliser des assemblages multi-matériaux au moyen de vis fluo-extrudeuses et de clous. Cependant, cette solution ne permet pas la réalisation d'assemblage incluant notamment des tôles acier à hautes performances. Un autre inconvénient est l'existence d'une protubérance saillante résiduelle après assemblage.

Il est enfin connu de réaliser des assemblages via une technique de soudage par points, notamment lors d'une opération de ferrage. Le soudage par points ou soudage électrique par résistance est une solution d'assemblage qui présente l'avantage d'être à la fois économique et performante sur le plan mécanique. Toutefois, cette technique est limitée à l'assemblage de deux éléments en matériau de même nature, comme typiquement deux tôles en acier. Cette technique s'avère complexe à mettre en œuvre dès lors que l'assemblage à réaliser comprend des éléments aux matériaux de nature différente, comme par exemple un assemblage aluminium-acier, acier-composite, aluminium-plastique, etc. Pour y remédier, il est connu, par exemple du document EP3026273, qui forme la base du préambule de la revendication 1, d'utiliser des inserts, aussi appelés patchs de soudage, qui sont positionnés dans l'un des éléments à assembler et sur lesquels l'électrode de soudage est appliquée pour réaliser l'assemblage. Ces patchs de soudage permettent donc de réaliser des assemblages multi-matériaux.

Cependant, les patchs de soudage présentent plusieurs inconvénients. Les dimensions, notamment le diamètre, des patchs de soudage sont généralement importantes. En effet, cela permet d'assurer l'accostage des électrodes d'une pince à souder sur les patchs plutôt que sur la pièce dans laquelle est inséré le patch, sans pour cela adjoindre un système de positionnement par vision sur aux bras de soudage robotisés. De plus, cela permet de dissiper la chaleur générée lors du soudage avant que cette chaleur n'atteigne et ne fasse fondre ou n'altère le matériau de la pièce dans laquelle est inséré le patch de soudage. Ce dimensionnement relativement important implique un coût matière élevé, ainsi qu'une masse accrue, à rebours de la problématique actuelle d'allègement des véhicules. De surcroît, l'intégration des patchs de soudage dans la pièce à assembler nécessite l'aménagement de trous de diamètre adapté à ces patchs de soudage, donc également de diamètre relativement important, ce qui tend à l'affaiblement de la pièce recevant les patchs de soudage. Aussi, il reste complexe d'intégrer efficacement des patchs de soudage dans des pièces par exemple en matériau plastique ou composite.

Il est notamment connu du document US4119827 un élément de fixation à souder pour fixer un premier panneau non ferreux et à un deuxième panneau ferreux.

Aussi, l'invention vise à pallier tout ou partie de ces inconvénients en proposant un insert, destiné à l'assemblage de deux pièces par soudage électrique par résistance, limitant l'affaiblissement de l'assemblage, offrant un coût réduit, et utilisable sans nécessiter des investissements d'équipement importants.

A cet effet, l'invention a pour objet un insert destiné à l'assemblage d'une première pièce et d'une deuxième pièce par soudage électrique par résistance de l'insert et de la deuxième pièce selon la revendication 1.

Ainsi, l'insert selon l'invention permet de réaliser un assemblage multi-matériaux par soudage par résistance électrique, cet assemblage étant robuste, à coûts matière limités, et réalisable avec des équipements existants de soudage par résistance, ce qui permet aussi de réduire les coûts.

En effet, les moyens de découplage thermique limitent la transmission de chaleur à la première dans laquelle est positionné l'insert, ce qui évite le risque d'altérer, sous l'effet de l'élévation de la température, un matériau de la première pièce. Cela est particulièrement avantageux quand la première pièce comprend un matériau plastique, comme par exemple la matrice d'un composite.

De surcroît, le différentiel de section entre la partie de tête recevant l'électrode de soudage et la partie de corps à l'extrémité de laquelle s'effectue le point de soudage permet une concentration de l'énergie de soudage et de l'échauffement au niveau de la partie de corps, en particulier à son extrémité, et un échauffement moindre de la partie de tête, donc une dissipation plus rapide de la chaleur au niveau de la partie de tête. Cela limite aussi la transmission de chaleur de la partie de tête à la première pièce lors de l'opération de soudage. Le différentiel de section permet également de disposer d'une face d'accostage relativement importante, ce qui offre une tolérance par rapport à la précision de la localisation du robot d'amenée de l'électrode de soudage sur l'insert. En d'autres termes, il n'est pas nécessaire d'investir et adjoindre au robot un système de positionnement par vision additionnel et coûteux.

Aussi, la partie de corps est destinée à être insérée à travers la première pièce, notamment à travers un trou réalisé à travers la première pièce. Comme cette partie de corps est de section réduite, le trou est de dimension réduite, ce qui limite l'affaiblissement structurel de la première pièce.

Selon l'invention, l'insert comprend des moyens de maintien configurés pour maintenir l'insert en position à travers la première pièce.

Cela permet de maintenir la partie de corps, celle qui chauffe le plus lors du soudage, à distance de la première pièce afin de limiter tout risque de dégradation de la première pièce.

Selon l'invention, les moyens de découplage thermique comprennent une zone ou logement périphérique destiné à contenir un matériau thermiquement isolant.

Cette solution permet d'isoler efficacement la partie de corps de la première pièce à coûts réduits.

Selon l'invention, la zone ou logement périphérique est délimitée par un ou plusieurs éléments en saillie depuis une sous-face de la partie de tête.

Selon un mode de réalisation, un sommet du ou des éléments en saillie forme une arête de découpe destinée à découper la première pièce.

Selon un mode de réalisation, la surface de soudage est configurée pour veniren appui contre la première pièce avant l'arête de découpe formée par le sommet. La surface de soudage peut ainsi dépasser d'un plan tangent à ce sommet.

Selon un mode de réalisation, le ou les éléments en saillie s'étend au moins jusqu'à hauteur du milieu de la partie de corps.

Selon un mode de réalisation, les moyens de découplage thermique comprennent une pièce en matériau thermiquement isolant.

Selon un mode de réalisation, les moyens de découplage thermique comprennent un revêtement en matériau thermiquement isolant.

Cette solution offre une compacité améliorée, limitant les dimensions du trou réalisé dans la première pièce, et conséquemment l'affaiblissement mécanique de cette première pièce.

Selon un mode de réalisation, la partie de tête comprend au moins un conduit d'évent.

Cela permet de dissiper plus rapidement la chaleur dégagée au niveau de la partie de tête lors du soudage, donc de limiter le risque de faire fondre la partie de la première pièce au contact de la partie de tête.

Selon un mode de réalisation, la partie de tête comprend une surface d'engagement configurée pour recevoir un outil en vue d'appliquer à la partie de tête un effort destiné à rompre la soudure ou l'insert.

Cette caractéristique permet de rompre aisément l'insert, donc faciliter une opération de maintenance ou de remplacement nécessitant de désassembler la première pièce et la deuxième pièce.

Selon un mode de réalisation, la partie de corps comprend une portion à section réduite en direction de la surface de soudage.

Cette restriction de section permet de focaliser la chaleur à l'extrémité de la partie de corps lors du soudage, en vue de limiter la diffusion de chaleur dans les autres parties de l'insert et dans la zone de découplage thermique, en particulier vers la première pièce.

Selon un mode de réalisation, l'insert comprend des moyens de fixation configurés pour permettre de fixer sur l'insert un composant destiné à coopérer avec lesdits moyens de fixation.

Cela permet de rapporter d'autres pièces sur l'assemblage des première et deuxième pièces préalablement réalisé au moyen de l'insert.

Selon un mode de réalisation, la partie de tête comprend un premier matériau et la partie de corps comprend un deuxième matériau distinct du premier matériau.

Cette caractéristique permet de créer un différentiel de résistivité électrique le long de l'insert, complémentaire à celui matérialisé par le différentiel de section entre la partie de tête et la partie de corps, afin de concentrer les lignes de courant électrique vers une partie centrale de la partie de tête et par conséquent limiter le risque de transmission de chaleur à la première pièce via la partie de tête. Les différentes parties de l'insert peuvent ainsi comprendre des matériaux distincts. Par exemple, la partie de tête est en aluminium, la partie de corps en acier, plus résistif, et les moyens de découplage thermique en céramique.

Selon un mode de réalisation, la surface d'appui présente un rebord périphérique destiné à venir en appui contre la première pièce.

Selon un autre aspect, l'invention a aussi pour objet un procédé d'assemblage d'une première pièce et d'une deuxième pièce, le procédé de d'assemblage comprenant les étapes : d'intégration d'un insert ayant les caractéristiques précitées dans la première pièce, de soudage de l'insert sur la deuxième pièce.

Selon un mode de réalisation, l'étape d'intégration de l'insert dans la première pièce est effectuée à la fabrication de la première pièce.

Cela offre un gain de temps, donc limite le coût du procédé.

Selon un mode de réalisation, l'étape d'intégration de l'insert dans la première pièce comprend une étape de découpe de la première pièce par l'insert.

Selon un mode de réalisation, l'étape de soudage est une étape de soudage électrique par résistance. Le procédé peut comprendre une étape d'application d'une électrode de soudage sur l'insert. Cette électrode de soudage présente avantageusement une section supérieure ou égale à la section de la partie de tête de l'insert.

Cela permet l'accostage de l'électrode de soudage en compensant les imprécisions de positionnement (insert par rapport à la première pièce, première pièce par rapport à la deuxième pièce, bras de robot par rapport à l'ensemble formé de la première pièce et de l'insert, etc.).

La dimension relativement importante de l'électrode de soudage permet également de répartir l'énergie de soudage sur une plus grande surface. Plus la surface de contact entre la partie de tête de l'insert et l'électrode est importante, moins il y a d'énergie transmise par unité de surface, ce qui limite l'élévation de la température au niveau de la partie de tête et donc contribue à protéger la première pièce.

Aussi, la limitation de l'élévation de la température entre l'électrode et l'insert favorise la répétabilité et la constance de soudage. L'électrode se dégrade moins et nécessite moins souvent d'être remplacée.

Selon un mode de réalisation, le procédé comprend une étape de refroidissement de l'insert.

Cela permet de limiter la chaleur transmise à la première pièce lors de l'opération de soudage. Cela permet aussi de limiter l'élévation de température entre l'électrode et l'insert, limitant donc aussi la détérioration de l'électrode.

Selon un mode de réalisation, le procédé comprend l'utilisation d'une seule électrode appliquée sur l'insert, notamment sur la partie de tête de l'insert.

Cela permet un soudage mono-accès, c'est-à-dire possible en accostant une électrode d'un seul côté. Il n'est autrement dit plus nécessaire de pincer l'assemblage entre deux électrodes, mais simplement de mettre la deuxième pièce à la polarité opposée à celle de l'électrode de soudage appliquée sur l'insert, l'insert étant au contact de la deuxième pièce. Cela permet de travailler avec des pièces dont l'accès à la zone de soudage est difficile.

Selon un mode de réalisation, le procédé d'assemblage comprend une étape de collage de la première pièce et de la deuxième pièce.

Cette combinaison de l'insert selon l'invention avec un collage permet d'améliorer l'efficacité du collage et, par conséquent, l'utilisation de colles moins onéreuses, car moins complexes.

Selon un mode de réalisation, le procédé comprend la formation d'un bossage dans la deuxième pièce.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue de côté et semi-transparence d'un insert selon un mode de réalisation de l'invention,
- Les figures 2 et 3 sont des vues en perspective, respectivement de dessus et de dessous, d'un insert selon un mode de réalisation de l'invention,
- Les figures 4A et 4B sont des vues en coupe d'un insert selon un mode de réalisation de l'invention, respectivement avant et après assemblage d'une première pièce et d'une deuxième pièce au moyen de cet insert,
- Les figures 5A et 5B sont des vues en coupe d'un insert selon un mode de réalisation de l'invention, respectivement avant et après assemblage d'une première pièce et d'une deuxième pièce au moyen de cet insert,
- Les figures 6A et 6B sont des vues en coupe d'un insert selon un mode de réalisation de l'invention, respectivement avant et après assemblage d'une première pièce et d'une deuxième pièce au moyen de cet insert, où un jeu fonctionnel est prévu entre les première et deuxième pièces pour permettre notamment l'application d'une protection de surface sur les faces en regard des première et deuxième pièces, le jeu fonctionnel formant passage pour la circulation d'un fluide,
- La figure 7 est une vue en coupe d'un insert selon un mode de réalisation de l'invention avant assemblage d'une première pièce et d'une deuxième pièce au moyen de cet insert, permettant de générer une tension mécanique d'assemblage entre les première et deuxième pièces après réalisation de l'opération de soudage de l'insert,
- La figure 8 est une vue en perspective et de dessus d'un insert selon un mode de réalisation de l'invention,
- La figure 9 est une vue en perspective et en coupe partielle d'un insert selon un mode de réalisation de l'invention,
- Les figures 10A et 10B sont des vues en perspective, respectivement de dessus et de dessous, d'un insert selon un mode de réalisation de l'invention, intégrant des moyens de fixation à un composant complémentaire,
- Les figures 11A et 11B sont des vues en perspective, respectivement de dessus et de dessous, d'un insert selon un mode de réalisation de l'invention, intégrant des moyens de fixation à un composant complémentaire,
- Les figures 12A et 12B sont des vues en perspective et en coupe illustrant des étapes d'un procédé d'assemblage au moyen d'un insert selon un mode de réalisation de l'invention,
- La figure 13 est une vue en perspective et en coupe illustrant une étape du procédé d'assemblage par l'intermédiaire d'un insert selon un mode de réalisation de l'invention,
- La figure 14 est une vue en coupe d'un insert selon un mode de réalisation de l'invention,
- La figure 15 est une vue en coupe d'un insert selon un mode de réalisation de l'invention,
- La figure 16 est une vue en coupe d'un insert selon un mode de réalisation de l'invention,
- La figure 17 est une vue en coupe d'un insert selon un mode de réalisation de l'invention,
- La figure 18 est une vue en coupe d'un insert selon un mode de réalisation de l'invention
- La figure 19 est une vue en coupe d'un insert selon un mode de réalisation de l'invention,
- Les figures 20A et 20B sont des vues en coupe d'un insert selon un mode de réalisation de l'invention.

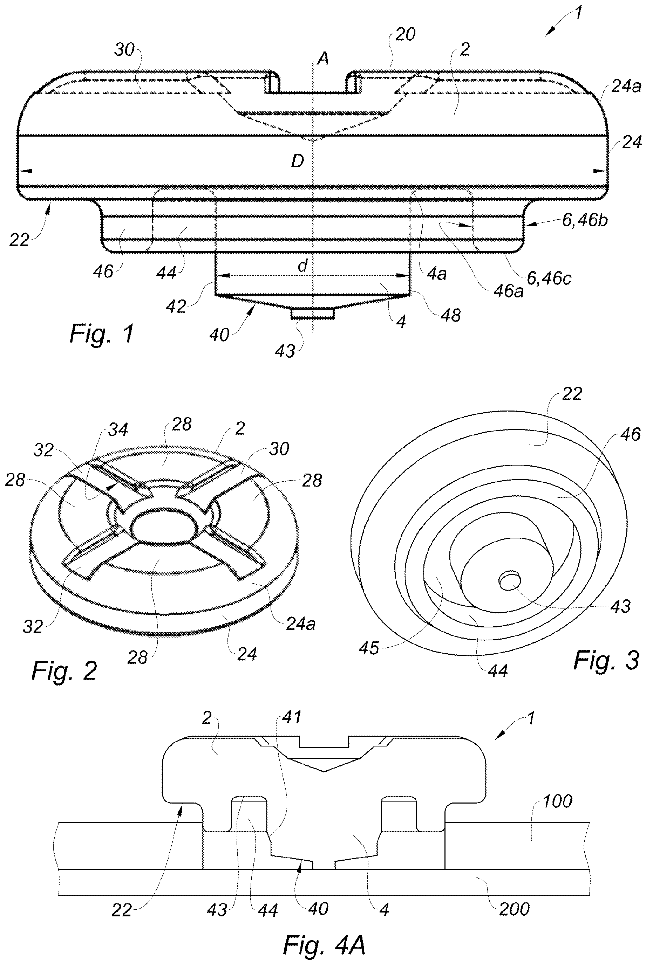

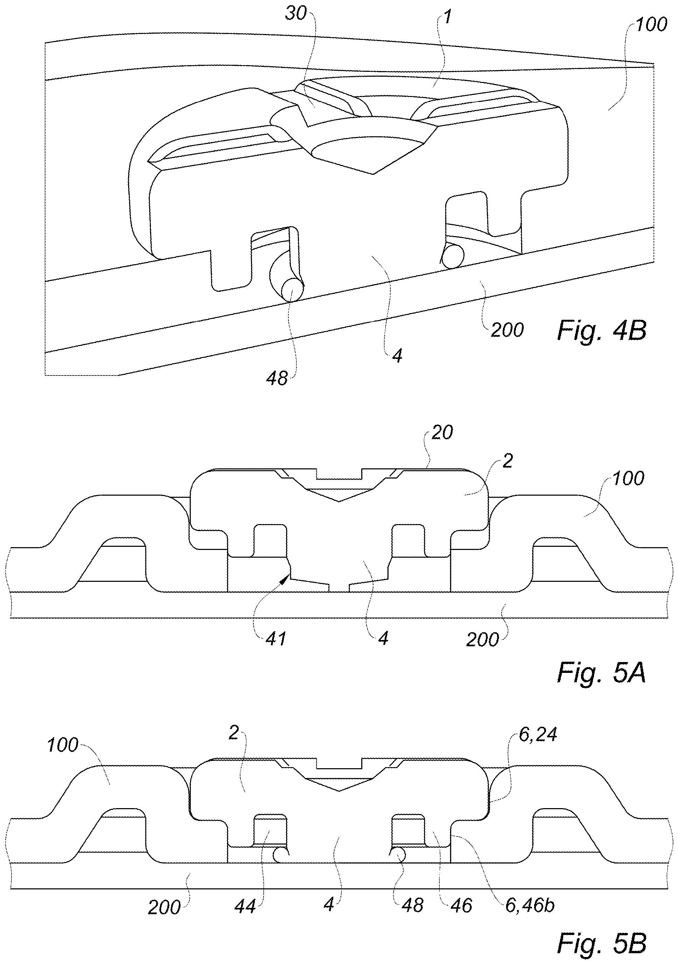

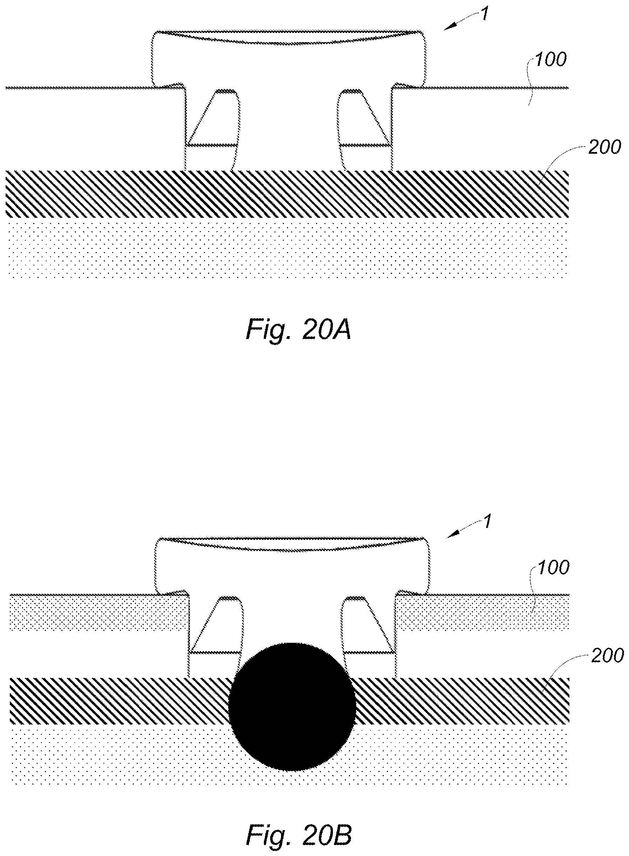

La figure 1 montre un insert 1 selon un mode de réalisation de l'invention. L'insert 1 est destiné à l'assemblage d'une première pièce 100 et d'une deuxième pièce 200, visibles par exemple sur les figures 4A et 4B, par l'intermédiaire d'une opération de soudage électrique par résistance, aussi appelé soudage par point électrique (PSE). L'insert 1 pourrait aussi permettre l'assemblage de plus de deux pièces ou tôles empilées, par soudage électrique par résistance, comme cela est visible sur les figures 20A et 20B.

L'insert 1 est destiné à être inséré à travers un trou ménagé dans la première pièce 100, à être mis en contact avec la deuxième pièce 200, ici positionnée sous la première pièce 100, et parcouru par un courant électrique afin de provoquer une élévation de température et conséquemment un soudage de l'insert 1 et de la deuxième pièce 200, la première pièce 100 restant maintenue assemblée à la deuxième pièce 200 par l'insert 1.

La première pièce 100 et la deuxième pièce 200 peuvent comprendre des matériaux différents. A titre d'exemple, la première pièce 100 peut être en matériau plastique ou composite, par exemple à matrice thermoplastique ou thermodurcissable et à renforts de type fibres courtes ou longues, tandis que la deuxième pièce 200 peut être en métal, par exemple en acier. Lorsque la première pièce 100 est en un matériau électriquement conducteur, par exemple métallique, l'insert 1 peut être partiellement ou complètement recouvert d'un revêtement électriquement isolant pour éviter un court-circuit.

L'insert 1 comprend une partie de tête 2 et une partie de corps 4.

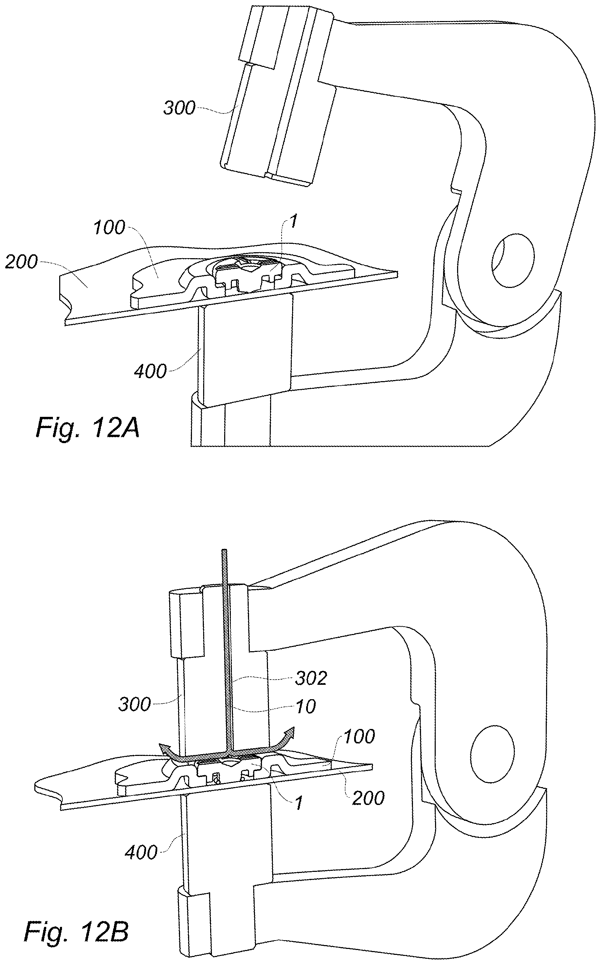

La partie de tête 2 peut présenter une forme de disque. La partie de tête 2 comprend une face 20 d'accostage destinée à recevoir l'électrode de soudage 300, visible sur les figures 12A et 12B, et, en sous-face, opposée à la face 20 d'accostage, une surface 22 d'appui destinée à venir en appui contre la première pièce 100 afin d'empêcher un désassemblage des première et deuxième pièces 100, 200. La surface 22 d'appui correspond préférentiellement à une surface périphérique de la sous-face de la partie de tête 2. La surface 22 d'appui peut être de forme annulaire. La face 20 d'accostage et/ou la surface 22 d'appui peuvent être orthogonales à un axe longitudinal A de l'insert 1, ou parallèles entre elles.

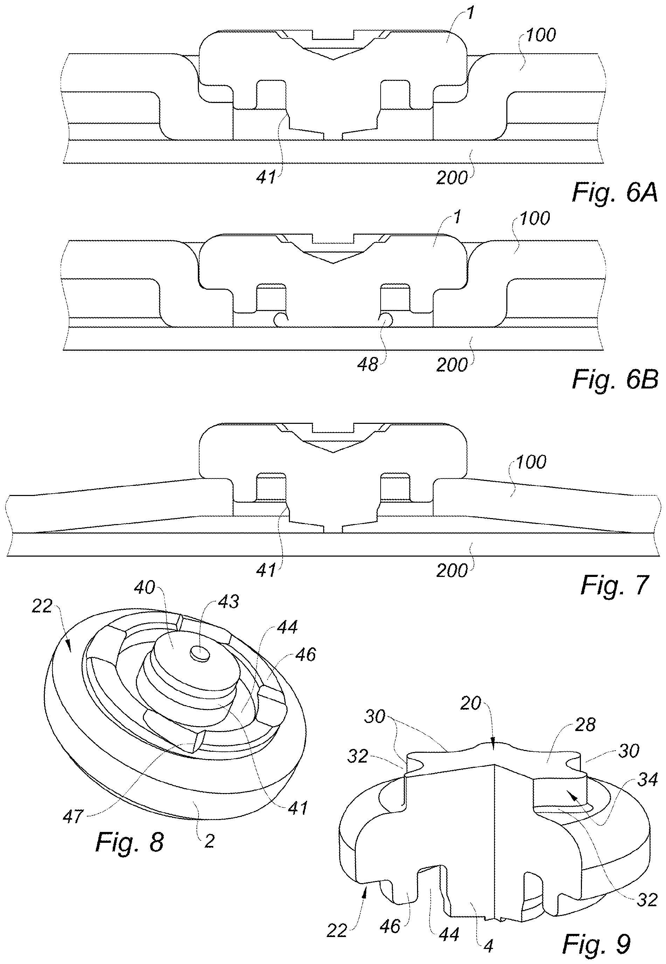

La partie de tête 2 peut comprendre une paroi latérale 24, par exemple cylindrique, reliant la face d'accostage 20 et la sous-face de la partie de tête 2. La paroi 24 latérale peut être destinée à venir en appui contre la première pièce 100, afin de contribuer au maintien de la première pièce 100 et de l'insert 1, comme cela est illustré sur les figures 5A, 5B, 6A et 6B. Selon l'exemple des figures 5A et 5B, la résistance au cisaillement de l'ensemble formé de l'insert 1 et des première et deuxième pièces 100, 200 est accentuée en répartissant sur une surface la plus importante possible de l'insert 1 les contraintes de cisaillement. La partie de corps 4 est destinée à être insérée dans la première pièce 100. La partie de corps 4 peut présenter une forme cylindrique.

La partie de corps 4 peut s'étendre longitudinalement le long de l'axe A. La partie de corps 4 s'étend à partir de la sous-face de la partie de tête 2. La partie de corps 4 comprend une première extrémité 4a reliée à la partie de tête 2, au niveau de sa sous-face, et une deuxième extrémité 4b opposée. La partie de corps 4 peut avantageusement présenter un différentiel de section en direction de sa deuxième extrémité 4b, notamment une portion 41 de moindre section par rapport à une portion de la partie de corps 4 reliée à la partie de tête 2, comme visible sur la figure 4A, 6A, ou 7. La portion 41 à section moindre ou décroissante s'étend préférentiellement au niveau de la deuxième extrémité 4b de la partie de corps 4, cette portion 41 à section décroissante pouvant être adjacente à la surface 40 de soudage. La portion 41 à section décroissante peut présenter par exemple une forme cylindrique et/ou tronconique. Cette restriction de section permet de concentrer de manière très localisée la chaleur après que le procédé de soudage ait été amorcé notamment par l'amorce 43. Cela permet de réaliser un point de fusion précis et constant. Cela permet également de disposer d'une réserve de matière pour compenser les variation d'épaisseurs de la première pièce 100 et ainsi auto-ajuster au soudage la longueur exacte de la partie de corps 4 adaptée à un accostage de qualité et donc jointif entre les première et deuxième pièces 100, 200. La portion 41 à section moindre ou décroissante, le cas échéant l'amorce 43, est configurée pour que cet excédent de matière reste à distance de la première pièce 100 et contenu dans les limites de la zone de découplage thermique. L'insert 1 a ainsi une plage d'utilisation élargie en termes de variation d'épaisseur de la première pièce 100.

La deuxième extrémité 4b comprend une surface 40 de soudage destinée à être soudée à la deuxième pièce 200. La partie de corps 4 présente une paroi 42 latérale. La surface 40 de soudage peut présenter une section décroissante dans une direction opposée à la partie de tête 2. Par exemple, la surface 40 de soudage peut présenter une forme conique ou tronconique. Par ailleurs, la surface 40 de soudage peut comprendre une amorce 43 de soudage s'étendant en saillie à partir de la surface 40 de soudage.

La partie de tête 2 et la partie de corps 4 sont configurées pour permettre la circulation d'un courant électrique depuis la face 20 d'accostage jusqu'à la surface 40 de soudage. En particulier, la partie de tête 2 et la partie 4 de corps comprennent un matériau électriquement conducteur, par exemple métallique. L'insert 1, notamment la partie 2 de tête et/ou la partie 4 de corps, peut comprendre de l'acier, de l'aluminium, du titane ou du cuivre.

La partie de tête 2 et la partie de corps 4 peuvent être monobloc, ou bien être fixées l'une à l'autre pour former l'insert 1. La partie de tête 2 peut comprendre un premier matériau et la partie de corps 4 peut comprendre un deuxième matériau distinct du premier matériau, notamment de résistivité électrique supérieure à celle du premier matériau. Cela permet de renforcer un différentiel de résistivité électrique entre la partie de tête 2 et la partie de corps 4, afin de localiser préférentiellement la puissance électrique, et donc la chaleur générée, au centre de l'insert 1. Par exemple, la partie de tête 2 comprend de l'aluminium, la partie de corps 4 de l'acier. Selon une possibilité, la partie de corps 4 comprend plusieurs matériaux ayant des résistivités électriques différentes. Plus particulièrement, la deuxième extrémité 4b de la partie de corps peut comprendre un matériau de résistivité électrique supérieure au reste de la partie de corps 4 ou un matériau plus propice à la formation d'une soudure de qualité avec la deuxième pièce 200.

On notera que la partie de corps 4 a une section inférieure à celle de la partie de la partie de tête 2. En particulier, la partie de corps 4 présente des dimensions (autres que sa hauteur le long de l'axe A) inférieures à celle de la partie de tête 2. Comme illustré sur la figure 1, la partie de corps 4 peut présenter un diamètre d inférieur au diamètre D de la partie de tête. De préférence, le rapport de section ou de diamètre entre la partie de corps 4 et la partie de tête 2 est de l'ordre d'au moins 15%.

De préférence, la partie 4 de corps s'étend de manière centrale à partir de la partie de tête 2 afin que les lignes de courant électrique parcourant l'insert 1 lors de l'opération de soudage électrique par résistance, se concentrent au centre de l'insert 1.

L'insert 1 comprend des moyens de découplage thermique destinés à prévenir une transmission de chaleur depuis la partie de corps 4 jusqu'à la première pièce 100 lors de l'opération de soudage. Les moyens de découplage thermique sont destinés à être interposés entre la partie de corps 4 et la première pièce 100 lors de l'opération de soudage, plus précisément entre la partie de corps 4 et la surface 22 d'appui. Les moyens de découplage thermique s'étendent tout autour de la partie de corps 4, notamment tout autour de la première extrémité 4a de la partie de corps 4, entre celle-ci et la surface 22 d'appui.

Il est possible de prévoir des moyens de découplage thermique s'étendant de plus entre la partie de tête 2 et la première pièce 100, c'est-à-dire autour de la partie de tête 2 et notamment autour de la paroi latérale 24 de la partie de tête 2, en particulier si les moyens de découplage thermique comprennent un matériau compatible aux sollicitations d'arrachement. Les moyens de découplage thermique peuvent par ailleurs comprendre un matériau également adapté pour résister aux contraintes de cisaillement et ainsi contribuer au maintien de la première pièce 100, notamment quand les moyens de découplage thermique sont destinés à être au contact de la première pièce 100.

Comme illustré sur la figure 3, les moyens de découplage thermique comprennent avantageusement une zone ou logement 44 périphérique, par exemple de forme annulaire, s'étendant autour de la paroi latérale 42 de la partie de corps 4, et destiné à contenir un matériau thermiquement isolant, comme de l'air.

La zone ou le logement 44 de rupture de pont thermique peut être délimité par un ou plusieurs éléments 46 en saillie depuis la sous-face de la partie de tête 2, comme une nervure, par exemple annulaire. Le ou les éléments 46 en saillie est agencé(s) à distance de la partie de corps 4, notamment tout autour de celle-ci. Le ou les éléments 46 en saillie peuvent présenter une face 46a latérale intérieure et une face 46b latérale extérieure. La zone ou volume 44 de rupture de pont thermique est ici délimité en partie par la paroi 42 latérale de la partie de corps 4, la face 46b de l'élément 46 en saillie, et une paroi de fond 45. Les moyens de découplage thermique peuvent inclure l'élément 46 en saillie, qui peut être en matériau thermiquement isolant, par exemple en céramique.

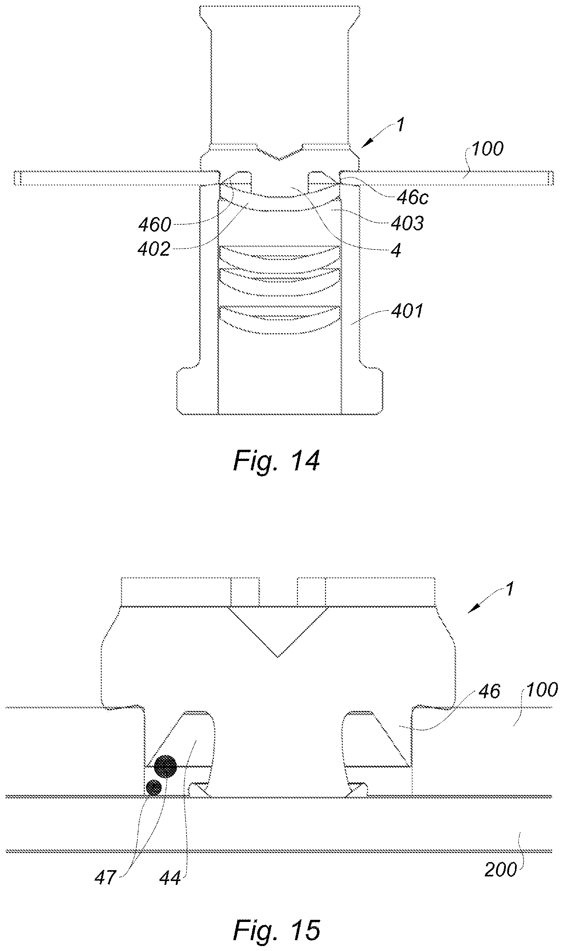

Comme illustré sur la figure 14, un sommet 46c de l'élément 46 en saillie peut présenter une forme saillante, notamment une forme d'arête de découpe configurée pour permettre de découper un trou dans la première pièce 100 à travers laquelle l'insert 1 est destiné à être intégré. L'arête de découpe peut être orientée vers l'extérieur, comme illustré sur la figure 14 : ainsi, cette arête peut être formée à la jonction de deux plans inclinés dont celui agencé du côté extérieur est moins incliné par rapport à l'axe A que le plan incliné 460 agencé du côté de la partie de corps 4.

Avantageusement, la deuxième extrémité 4b de la partie de corps 4 dépasse d'un plan affleurant le sommet 46c, de sorte que la matière de la première pièce 100 est pré-tendue avant découpe, ce qui améliore l'efficacité de cette découpe. Le sommet 46c peut être adapté pour découper par exemple de l'aluminium, du plastique, des matériaux composites, ou de l'acier.

L'élément 46 en saillie peut s'étendre autour de la partie de corps 4 selon une trajectoire qui peut être par exemple circulaire, ovoïde, rectangulaire, carré, etc.

La zone ou le logement 44 peut s'étendre au moins partiellement en creux par rapport à la sous-face de la partie de tête 2, c'est-à-dire présenter un fond 45 qui s'étend à une hauteur comprise entre la surface 22 d'appui et la face 20 d'accostage. Cela limite la transmission de chaleur radialement depuis la partie de corps 4.

Les moyens de découplage thermique peuvent comprendre une pièce, éventuellement rapportée, en matériau thermiquement isolant, par exemple en céramique, pouvant le cas échéant être positionnée en partie ou en totalité à l'intérieur de cette zone ou logement 44. Cette pièce peut correspondre à une bague pouvant être formée par exemple par l'élément 46 en saillie, cet élément 46 en saillie étant comprenant un matériau thermiquement isolant.

Alternativement ou en complément, les moyens de découplage thermique peuvent comprendre un revêtement (non représenté) en un matériau thermiquement plus isolant que le matériau de la partie de corps 4. Ce revêtement peut être total, c'est-à-dire recouvrir l'intégralité de l'insert 1, ou partiel, par exemple agencé sur la paroi 42 latérale de la partie de corps 4.

De préférence, comme illustré sur la figure 15, la zone ou le logement 44 périphérique sert de zone d'accueil pour des projections 47 de matière en fusion pendant l'opération de soudage, bloquées par l'élément 46 en saillie. L'évacuation de matière en fusion vers la zone libre d'accueil est aussi favorisée par la section décroissante de la deuxième extrémité 4b, et plus précisément de la surface 40 de soudage, notamment du fait de sa forme conique ou tronconique.

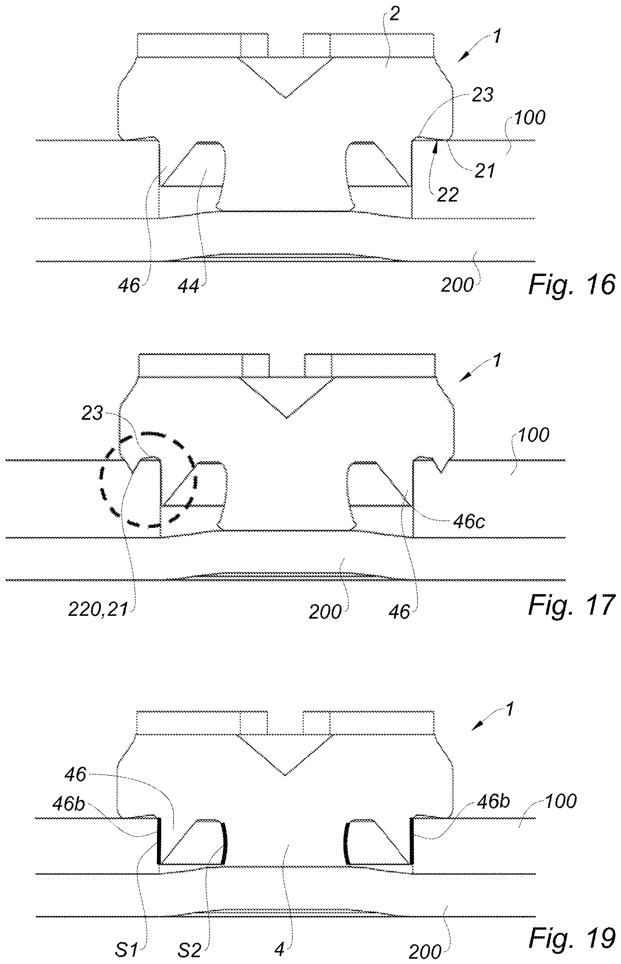

Comme illustré par la figure 16, la zone libre entre la première pièce 100 et la partie de corps 4 permet aussi à la deuxième pièce 200 de flamber dans cet espace libre pendant le soudage, ce qui crée un rappel maintenant efficacement en tension l'assemblage résultant de l'opération de soudage. En effet, lors de l'opération de soudage, la matière de la partie de corps 4 est consommée si bien que la deuxième pièce 200 flambe dans la zone libre sous l'effet de pincement exercé par les électrodes et pour compenser la réduction de la longueur de la partie de corps 4. Ainsi la tension est emmagasinée dans l'assemblage de manière définitive.

Toujours en référence à la figure 16, on notera que la partie de tête 2 peut présenter un rebord 21 périphérique en sous-face et destiné à venir en appui contre la première pièce 100. Ce rebord 21 périphérique peut être formé à l'extrémité de la surface 22 d'appui, qui peut être par exemple inclinée par rapport à un plan orthogonal à l'axe A, de manière à former une poche 23 périphérique en sous-face de la partie de tête 2, conférant à la partie de tête 2 une réserve d'élasticité qui contribuera à la mise en tension de l'assemblage. Cette poche peut aussi permettre d'absorber un éventuel delta de dilatation différentielle entre la première pièce 100 et l'insert 1, ceux-ci pouvant être de matériaux différents.

Comme illustré sur la figure 19, la face 46b latérale extérieure peut être configurée pour être de superficie S1 plus importante que la superficie S2 de la paroi 42 latérale résiduelle après soudage. En particulier, l'élément 46 en saillie peut s'étendre selon l'axe A sur une hauteur telle que son sommet 46c est au niveau ou en-dessous du milieu de la partie de corps 4. Cela permet d'éviter des problèmes de matage ou microdéchirements.

L'insert 1 comprend avantageusement des moyens de maintien configurés pour immobiliser l'insert 1 en position à travers la première pièce 100, et ainsi éviter un déplacement relatif de l'un par rapport à l'autre susceptible de mettre en contact la partie de corps 4 et la première pièce 100.

Les moyens de maintien comprennent par exemple une surface 6 de blocage, qui peut être la face 46b extérieure et/ou un sommet ou face axiale 46c de l'élément 46 en saillie et/ou la paroi latérale 24 de la partie de tête 2, destinée à maintenir la partie de corps 4 à distance de la première pièce 100 quand l'insert 1 est intégré à cette première pièce 100.

Les moyens de maintien peuvent comprendre des ergots ou crans 47 aménagés sur la surface 6 latérale de blocage, notamment sur le sommet 46c de l'élément 46 en saillie, pour mettre en prise la partie de tête 2 et la première pièce 100.

La paroi 24 latérale de la partie de tête 2 peut présenter une portion 24a à section décroissante en direction de la face 20 d'accostage, si bien que les moyens de maintien peuvent inclure cette portion 24a à section décroissante de la paroi 24 latérale.

Les moyens de maintien peuvent aussi comprendre une portion 24a de la paroi 24 latérale de la partie de tête, la portion 24a joignant la face 20 d'accostage au reste de la paroi 24 latérale. Cette portion 24a est à section décroissante en direction de la face d'accostage. La première pièce 100 peut s'étendre sur cette portion 24a à section décroissante, par exemple par surmoulage.

Selon l'exemple de réalisation illustré à la figure 17, les moyens de maintien peuvent comprendre une protubérance 220, par exemple annulaire, faisant saillie depuis la surface 22 d'appui. Le cas échéant, cette protubérance 220 peut être aussi le rebord 21 périphérique, la poche pouvant être délimitée entre cette protubérance et l'élément 46 en saillie.

Les moyens de maintien sont de préférence agencés sur la partie de tête 2.

Les moyens de découplage thermique sont avantageusement interposés entre la partie de corps 4 et les moyens de maintien.

Ainsi, les moyens de découplage thermique sont configurés pour maintenir la première pièce 100 à distance de la partie de corps 4 avant et pendant l'opération de soudage.

Comme illustré par exemple sur les figures 2, 9 et 11A, la face 20 d'accostage peut présenter une ou plusieurs protubérances 28 délimitant un ou plusieurs canaux 30 d'évent destinés à la circulation d'un fluide de refroidissement, comme de l'air, lors de l'opération de soudage. Le fluide de refroidissement est par exemple expulsé par l'extérieur ou l'intérieur de l'électrode 300 de soudage en direction de la face 30 d'accostage. Les canaux 30 d'évent présentent une ouverture 32 radiale permettant l'évacuation du fluide de refroidissement hors des canaux 30 d'évent. Les ouvertures 32 radiales sont agencées préférentiellement au-dessus de la paroi 24 latérale de la partie de tête 2.

On notera par ailleurs que la partie de tête 2, notamment la face 20 d'accostage, comprend avantageusement une surface 34 d'engagement, par exemple orthoradiale ou à composante orthoradiale, configurée pour recevoir un outil, par exemple un tournevis ou une clé, en vue d'appliquer à la partie de tête 2 un effort, notamment un couple, destiné à rompre la soudure ou l'insert 1. Cette surface 34 d'engagement peut correspondre à une paroi latérale d'une protubérance 28 de la face d'accostage, et peut le cas échéant délimiter en partie un ou des canaux 30 d'évent. Selon l'exemple de la figure 9, la surface 34 d'engagement est ménagée sur la paroi latérale d'une protubérance 28 en forme d'étoile, de type empreinte ou clé hexalobulaire interne. La surface 34 d'engagement peut correspondre à une portion de la paroi 24 latérale.

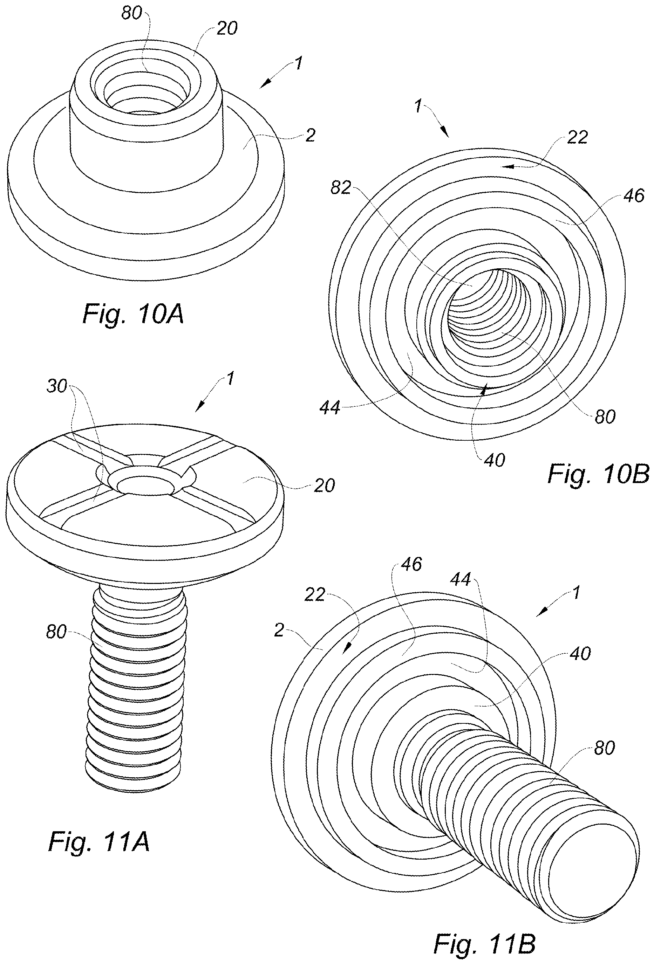

Comme illustré sur les figures 10A, 10B, 11A et 11B, l'insert 1 peut comprendre des moyens de fixation configurés pour permettre de fixer sur l'insert 1 un composant, comme par exemple une vis ou un écrou, ce composant pouvant comprendre des moyens de fixation complémentaires configurés pour coopérer avec les moyens de fixation de l'insert 1. Les moyens de fixation peuvent inclure un filetage 80 pouvant être ménagé dans la paroi latérale d'un trou 82 traversant l'insert 1 ou dans la paroi latérale d'une tige s'étendant à partir de la deuxième extrémité de la partie de corps 4. Les moyens de fixation peuvent comprendre une surface de fixation, comme par exemple une surface destinée à un soudage ou un emmanchement en force, ou encore des éléments de clippage ou d'emboîtement, par exemple de type baïonnette.

L'invention a aussi pour objet un procédé d'assemblage de la première pièce 100 et de la deuxième pièce 200, le procédé de d'assemblage comprenant les étapes :
- d'intégration dans la première pièce 100 de l'insert 1 ayant tout ou partie des caractéristiques précédemment décrites,
- de soudage de l'insert 1 sur la deuxième pièce 200.

Selon un mode de réalisation, l'étape de soudage est une étape de soudage électrique par résistance de l'insert 1 sur la deuxième pièce 200. Le procédé peut préalablement comprendre une étape d'application d'une électrode 300 de soudage sur la partie de tête 2 de l'insert 1.

L'étape d'intégration de l'insert 1 dans la première pièce 100 peut être effectuée en reprise, notamment par déformation d'une partie de l'insert 1, comme les ergots formant le cas échéant les moyens de maintien, ou de la première pièce 100, s'apparentant par exemple à un sertissage ou rivetage. L'insert 1 peut également être vissé, inséré en pivotement, dans la première pièce 100, notamment si l'insert 1 est pourvu d'ergots ou crans 47 venant en prise avec la première pièce 100, comme illustré sur la figure 8.

Alternativement, il est possible d'implanter directement l'insert 1 dans l'outillage ou le moule de la presse destinée à former la première pièce 100. En d'autres termes, l'étape d'intégration de l'insert 1 dans la première pièce 100 peut être avantageusement effectuée à la fabrication de la première pièce 100, notamment au moment d'une opération de moulage de la première pièce 100. Dans le cas où la première pièce 100 est réalisée par injection, par exemple plastique, l'insert 1 peut être surmoulé et ainsi lié à la première pièce 100. Ce surmoulage peut-être accompagné d'une déformation de l'insert pour renforcer l'interaction mécanique entre l'insert 1 et lapremière pièce 100.

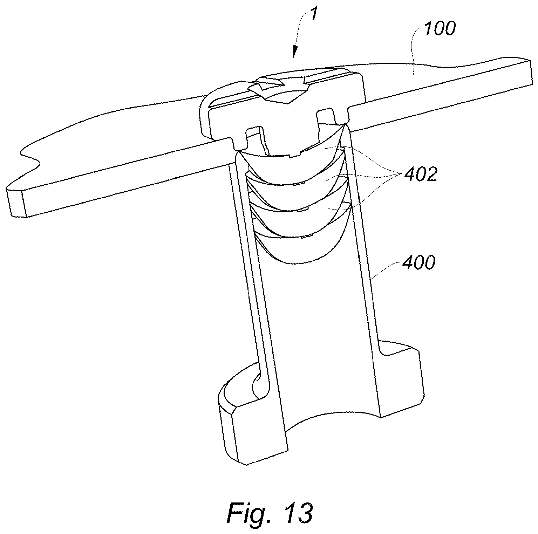

Par ailleurs, l'étape d'intégration peut comprendre une découpe de la première pièce 100 pour matérialiser un logement qui permettra l'implantation de l'insert 1, notamment dans le cas d'une première pièce 100 en composite, réalisée sur la base d'une structure ou d'un renfort à base de fibres longues structurées ou non. La réalisation de la découpe peut être effectuée à la fermeture du moule, par exemple au moyen d'un tube 401 creux, représenté sur la figure 13. Lors de la fermeture de l'outillage ou du moule, le tube vient découper un morceau ou riblon 402 de matière dans la première pièce 100. Ce morceau ou riblon de matière peut être extrait avant ouverture du moule ou de l'outillage, via l'intérieur du tube ayant généré la découpe. L'évacuation du morceau ou riblon de matière peut s'effectuer en continu et donc sans perturber la production, par exemple au moyen de l'insert 1 qui, lors de son insertion à l'intérieur du trou généré par la découpe, vient pousser ce morceau ou riblon dans le tube. La découpe d'un morceau ou riblon de matière peut concerner également une première pièce métallique, par exemple en aluminium, qui est réalisée par découpeemboutissage, notamment dans une presse transfert. Là aussi, dans cette étape de découpe, l'étape d'intégration de l'insert s'effectue à la fabrication de la première pièce 100, et non en reprise.

Selon l'exemple de la figure 14, la découpe est réalisée par l'insert 1 lui-même, plus précisément au moyen de l'arête de découpe 46c saillante. L'efficacité de la découpe peut être amplifiée par le dépassement de la deuxième extrémité 4b qui entre en contact avec la première pièce 100 avant que l'arête de découpe 46c ne commence à effectuer sa coupe. Ainsi la première pièce 100 flamble sous la charge qui est appliqué sur l'insert 1; charge pour laquelle un contre effort peut être exercé via un tube ou une matrice creuse 401. L'évidement de la matrice 401 accueille dans un premier temps le flambage de la première pièce 100. Le poinçon formé par l'arête 46c de découpe, ou la matrice 401, continue sa course dans l'axe de l'insert 1 et découpe un riblon 402 de matière dont la dimension est proche des dimensions et de la géométrie de l'anneau formé par l'élément 46 en saillie. Ce riblon 402 est en suite évacué via l'évidement 403 qui a été aménagé dans la matrice 401. La découpe peut être opérée à froid ou à chaud.

L'insert 1 joue ainsi lui-même le rôle de poinçon. Il n'y a donc aucun prétrou à prévoir pour assurer la mise en place de l'insert 1 sur la première pièce 100. De plus, la découpe de la première pièce étant ajustée à l'anneau formé par l'élément 46 en saillie, l'insert 1 est ainsi rendu solidaire de la pemière pièce 100 sans jeu dimensionnel.

L'étape d'intégration peut être réalisée lors d'une opération de ferrage.

L'étape d'application de l'électrode 300 s'effectue par mise en contact de l'électrode 300 de soudage contre la face 20 d'accostage. Cette étape comprend avantageusement l'utilisation d'une électrode ayant une section, notamment un diamètre, supérieure ou égale à la section, respectivement le diamètre, de la partie de tête 2 de l'insert 1. En pratique, l'électrode 300 peut présenter un diamètre égal au diamètre de la partie de tête 2 de l'insert 1 auquel viennent s'ajouter l'incertitude de localisation de l'insert 1 par rapport à la première pièce 100, l'incertitude de localisation de la première pièce 100 par rapport à la deuxième pièce 200, et l'incertitude de localisation de l'ensemble composé de la première pièce 100 et de la deuxième pièce 200 par rapport au bras robot et plus généralement par rapport au becque de soudage. Ainsi, c'est le diamètre de l'électrode 300 qui vient compenser l'ensemble des défauts de localisation.

Le procédé peut comprendre l'application d'une seconde électrode 400 sur la deuxième pièce 200, plus particulièrement en regard de l'insert 1. Cependant, il est possible de ne prévoir qu'une seule électrode, à savoir l'électrode 300 appliquée sur l'insert 1, afin de réaliser un soudage mono-accès. En effet, la deuxième extrémité 4b offre un contact ponctuel ou surfacique limité entre l'insert 1 et la deuxième pièce 200, si bien qu'il n'est pas nécessaire de pincer l'insert 1 et la deuxième pièce 200 entre deux électodes pour obtenir un point de contact, comme cela se fait par exemple entre deux tôles métalliques à assembler par soudage électrique par résistance. Ainsi, le procédé est avantageusement exempt de pincement de l'ensemble formé de l'insert et de la deuxième pièce 200 entre deux électrodes de soudage. Dans le cas où une seule électrode 300 est utilisée, la deuxième pièce 200, ou le cas échéant une pièce en appui direct ou indirect contre à la deuxième pièce 200 comme une troisième tôle ou quatrième tôle, est par exemple reliée à la masse ou à une polarité opposée. Dans le cas où une seconde électrode 400 est utilisée, la section ou les dimensions, notamment le diamètre, de cette seconde électrode 400 peut être plus faible que la section ou les dimensions, notamment le diamètre, de l'électrode 300 appliquée à la partie de tête 2 de l'insert 1, par exemple similaire à la section ou aux dimensions, comme le diamètre, de la partie de corps 4 de l'insert 1.

L'étape de soudage par résistance peut inclure une étape de refroidissement de l'électrode 300 de soudage et/ou de l'insert 1. Cette étape de refroidissement comprend la circulation d'un fluide de refroidissement 10, comme de l'air, par exemple de l'air comprimé, à travers un conduit 302 de l'électrode 300, et sa projection en direction de l'insert 1, notamment vers la partie de tête 2 ou face 20 d'accostage de l'insert 1. Ce fluide de refroidissement peut ensuite circuler à travers des canaux 30 d'évent réalisés sur la face 20 d'accostage ou réalisés sur l'extrémité de l'électrode 300 de soudage pour être orienté radialement et refroidir ainsi plus efficacement la partie de tête 2 de l'insert, qui est en contact avec la première pièce 100. Le refroidissement peut être effectué par amenée du fluide de refroidissement, notamment de manière centrale, par l'intérieur de l'électrode 300 de soudage, comme illustré sur la figure 12B, par l'extérieur de l'électrode 300 de soudage, de manière périphérique, par exemple au moyen de buses agencées autour de l'électrode 300 de soudage. L'étape de refroidissement a lieu préférentiellement pendant, et/ou après, l'opération de soudage, c'est-à-dire pendant et/ou après la circulation d'un courant électrique à travers l'insert 1.

Le procédé d'assemblage comprend une étape de collage de la première pièce 100 et de la deuxième pièce 200, notamment avant l'étape de soudage de l'insert 1 sur la deuxième pièce 200, l'étape de soudage pouvant intervenir avant séchage et/ou réticulation de la colle et assurer ainsi le maintien des première et deuxième pièces 100, 200 en attendant la matérialisation du joint collé, soit après séchage ou réticulation. Plus particulièrement, l'étape de collage comprend un dépôt de colle sur la première et/ou la deuxième pièce 100, 200, puis le cas échéant une localisation des première et deuxième pièces 100, 200 l'une par rapport à l'autre. Le procédé comprend ensuite, au moment du soudage de l'insert 1 sur la deuxième pièce 200, une étape consistant à exercer une pression sur l'insert 1 afin de matérialiser un accostage, c'est-à-dire une mise en contact, entre les première et deuxième pièces 100 et 200._Ce contact est maintenu de manière définitive par l'intermédiaire de l'insert 1 soudé à la deuxième pièce 200, et ce sans temps de latence comme c'est traditionnellement le cas lors d'un procédé d'assemblage uniquement avec de la colle. En d'autres termes, il n'y a pas besoin d'attendre le séchage ou réticulation de la colle. Les première et deuxième pièces 100, 200 sont figées._La colle peut ainsi sécher ou réticuler au cours des opérations qui suivent dans la fabrication, comme par exemple lors d'une étape ultérieur de traitement de type cataphorèse.

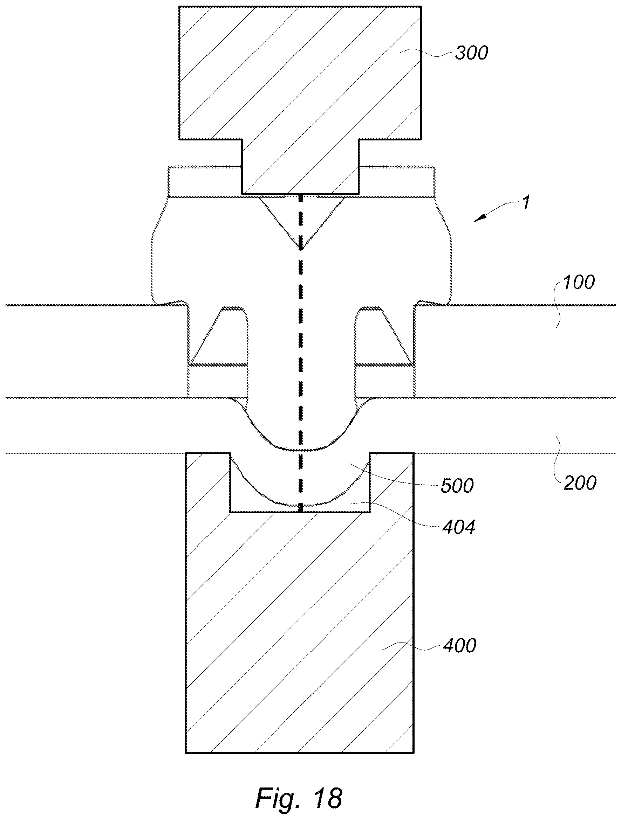

En référence à la figure 18, le procédé peut comprendre la formation d'un bossage 500 dans lequel la partie de corps 4 de l'insert 1 vient s'inscrire et se souder. Cela renforce la tenue mécanique de l'assemblage obtenu, et permet aussi d'utiliser ce bossage 500 pour effectuer un second assemblage, par exemple lors d'un autre soudage. Le bossage 500 peut être formé par la seconde électrode 400 pourvue d'un évidement 404, à la fermeture des électrodes, soit avant soit pendant la transmission de l'énergie de soudage.

Selon un autre mode de réalisation, l'étape de soudage est une étape de soudage par friction. L'insert 1 est mis en rotation autour de l'axe A. Cette mise en rotation, associée à un effort axial selon l'axe A, génère un échauffement localisé entre la deuxième extrémité 4b et la deuxième pièce 200. Cette élévation de température permet de réaliser le soudage. La mise en rotation de l'insert 1 autour de l'axe A peut être assurée au moyen d'un outil appliqué sur la surface 34 d'engagement.

L'insert 1 selon l'invention permet d'obtenir un assemblage multi-matériaux robuste et sans surcoûts. L'invention trouve son application par exemple dans l'industrie automobile pour l'assemblage de la caisse en blanc et éléments constitutifs, l'assemblage d'ouvrants type portes, capots ou coffre, dans l'industrie aéronautique par exemple pour l'assemblage d'éléments de fuselage ou d'éléments structuraux, et d'autres industries liées notamment aux domaines ferroviaire, agricole, etc.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention, telle que définie dans les revendications.

## Revendications

1. Insert (1) destiné à l'assemblage d'une première pièce (100) et d'une deuxième pièce (200) par soudage électrique par résistance de l'insert (1) et de la deuxième pièce (200), comprenant:
une partie de tête (2), la partie de tête (2) comprenant une face (20) d'accostage configurée pour recevoir une électrode (300) de soudage et, en sous-face, une surface (22) d'appui configurée pour venir en appui sur la première pièce (100) afin de maintenir la première pièce (100) assemblée à la deuxième pièce (200),
une partie de corps (4) destinée à être insérée dans la première pièce (100), la partie de corps (4) comprenant une surface (40) de soudage configurée pour être soudée à la deuxième pièce (200), la partie de corps (4) ayant une section inférieure à celle de la partie de tête (2), **caractérisé en ce que** l'insert (1) comprend
des moyens de découplage thermique s'étendant autour de la partie de corps (4) pour empêcher une transmission de la chaleur dégagée par la partie de corps (4) à la première pièce (100) lors de l'opération de soudage, les moyens de découplage thermique comprenant une zone ou logement (44) périphérique destiné à contenir un matériau thermiquement isolant, la zone ou logement (44) périphérique étant délimitée par un ou plusieurs éléments (46) en saillie depuis la sous-face de la partie de tête (2), et l'insert (1) comprend des moyens de maintien configurés pour maintenir l'insert (1) en position à travers la première pièce (100), les moyens de maintien comprenant une face (46b) latérale extérieure du ou des éléments (46) en saillie destinée à maintenir la partie de corps (4) à distance de la première pièce (100) quand l'insert (1) est intégré à cette première pièce (100).

2. Insert (1) selon la revendication 1, dans lequel un sommet (46c) du ou des éléments (46) en saillie forme une arête de découpe destinée à découper la première pièce (100).

3. Insert (1) selon la revendication 2, dans lequel la surface (40) de soudage est configurée pour venir en appui contre la première pièce (100) avant l'arête de découpe formée par le sommet (46c).

4. Insert (1) selon l'une des revendications 1 à 3, dans lequel le ou les éléments (46) en saillie s'étend au moins jusqu'à hauteur du milieu de la partie de corps (4).

5. Insert (1) selon l'une des revendications 1 à 4, dans lequel les moyens de découplage thermique comprennent une pièce en matériau thermiquement isolant.

6. Insert (1) selon l'une des revendications 1 à 5, dans lequel les moyens de découplage thermique comprennent un revêtement en matériau thermiquement isolant.

7. Insert (1) selon l'une des revendications 1 à 6, dans lequel la partie de tête (2) comprend au moins un conduit (30) d'évent.

8. Insert (1) selon l'une des revendications 1 à 7, dans lequel la partie de corps (4) comprend une portion (41) à section réduite en direction de la surface (40) de soudage.

9. Insert (1) selon l'une des revendications 1 à 8, dans lequel l'insert (1) comprend des moyens de fixation configurés pour permettre de fixer sur l'insert (1) un composant destiné à coopérer avec lesdits moyens de fixation.

10. Insert (1) selon l'une des revendications 1 à 9, dans lequel la partie de tête (2) comprend un premier matériau et la partie de corps (4) comprend un deuxième matériau distinct du premier matériau.

11. Insert (1) selon l'une des revendications précédentes, dans lequel la surface (22) d'appui présente un rebord (21, 220) périphérique destiné à venir en appui contre la première pièce (100).

12. Procédé d'assemblage d'une première pièce (100) et d'une deuxième pièce (200), le procédé de d'assemblage comprenant les étapes :
d'intégration d'un insert (1) selon l'une des revendications 1 à 11 dans la première pièce (100),
de soudage de l'insert (1) sur la deuxième pièce (200).

## Patentansprüche

1. Einsatz (1), der zum Fügen eines ersten Werkstücks (100) und eines zweiten Werkstücks (200) durch elektrisches Widerstandsschweißen des Einsatzes (1) und des zweiten Werkstücks (200) bestimmt ist, umfassend:
einen Kopfteil (2), wobei der Kopfteil (2) eine Anlegeseite (20), die so ausgelegt ist, dass sie eine Schweißelektrode (300) aufnimmt, und an der Unterseite eine Auflagefläche (22) umfasst, die so ausgelegt ist, dass sie auf dem ersten Werkstück (100) in Auflage geht, um das erste Werkstück (100) an das zweite Werkstück (200) gefügt zu halten,
einen Körperteil (4), der dazu bestimmt ist, in das erste Werkstück (100) eingesetzt zu werden, wobei der Körperteil (4) eine Schweißfläche (40) umfasst, die so ausgelegt ist, dass sie an das zweite Werkstück (200) geschweißt wird, wobei der Körperteil (4) einen kleineren Querschnitt als jenen des Kopfteils (2) aufweist, **dadurch gekennzeichnet, dass** der Einsatz (1) umfasst
Mittel zur thermischen Entkopplung, die sich um den Körperteil (4) herum erstrecken, um beim Schweißvorgang eine Übertragung der vom Körperteil (4) abgegebenen Wärme zum ersten Werkstück (100) zu verhindern, wobei die thermischen Entkopplungsmittel eine umlaufende Zone oder Aufnahme (44) umfassen, die dazu bestimmt ist, ein thermisch isolierendes Material zu enthalten, wobei die umlaufende Zone oder Aufnahme (44) von einem oder mehreren Elementen (46) begrenzt wird, die von der Unterseite des Kopfteils (2) vorspringen, und der Einsatz (1) Haltemittel umfasst, die so ausgelegt sind, dass sie den Einsatz (1) durch das erste Werkstück (100) hindurch in Position halten, wobei die Haltemittel eine seitliche Außenseite (46b) des oder der vorspringenden Elemente (46) umfassen, die dazu bestimmt ist, den Körperteil (4) in Abstand zum ersten Werkstück (100) zu halten, wenn der Einsatz (1) in dieses erste Werkstück (100) eingefügt wird.

2. Einsatz (1) nach Anspruch 1, wobei eine Spitze (46c) des oder der vorspringenden Elemente (46) eine Schneidkante bildet, die dazu bestimmt ist, in das erste Werkstück (100) zu schneiden.

3. Einsatz (1) nach Anspruch 2, wobei die Schweißfläche (40) so ausgelegt ist, dass sie vor der von der Spitze (46c) gebildeten Schneidkante am ersten Werkstück (100) in Auflage geht.

4. Einsatz (1) nach einem der Ansprüche 1 bis 3, wobei sich das oder die vorspringenden Elemente (46) mindestens bis auf Höhe der Mitte des Körperteils (4) erstrecken.

5. Einsatz (1) nach einem der Ansprüche 1 bis 4, wobei die thermischen Entkopplungsmittel ein Stück aus thermisch isolierendem Material umfassen.

6. Einsatz (1) nach einem der Ansprüche 1 bis 5, wobei die thermischen Entkopplungsmittel eine Beschichtung aus thermisch isolierendem Material umfassen.

7. Einsatz (1) nach einem der Ansprüche 1 bis 6, wobei der Kopfteil (2) mindestens eine Entlüftungsleitung (30) umfasst.

8. Einsatz (1) nach einem der Ansprüche 1 bis 7, wobei der Körperteil (4) in Richtung der Schweißfläche (40) einen Abschnitt (41) von verringertem Querschnitt umfasst.

9. Einsatz (1) nach einem der Ansprüche 1 bis 8, wobei der Einsatz (1) Befestigungsmittel umfasst, die so ausgelegt sind, dass sie es ermöglichen, ein Bauteil auf dem Einsatz (1) zu befestigen, das dazu bestimmt ist, mit den Befestigungsmittel zusammenzuwirken.

10. Einsatz (1) nach einem der Ansprüche 1 bis 9, wobei der Kopfteil (2) ein erstes Material umfasst, und der Körperteil (4) ein zweites Material umfasst, das sich vom ersten Material unterscheidet.

11. Einsatz (1) nach einem der vorstehenden Ansprüche, wobei die Auflagefläche (22) einen umlaufenden Rand (21, 220) aufweist, der dazu bestimmt ist, am ersten Werkstück (100) in Anlage zu gehen.

12. Verfahren zum Fügen eines ersten Werkstücks (100) und eines zweiten Werkstücks (200), wobei das Fügeverfahren die Schritte umfasst des:
Einfügens eines Einsatzes (1) nach einem der Ansprüche 1 bis 11 in das erste Werkstück (100),
Schweißens des Einsatzes (1) an das zweite Werkstück (200).

## Claims

1. An insert (1) intended for assembling a first part (100) and a second part (200) by electric resistance welding of the insert (1) and of the second part (200), comprising:
a head portion (2), the head portion (2) comprising a contact face (20) configured to receive a welding electrode (300) and, on the underside, a bearing surface (22) configured to bear against the first part (100) in order to hold the first part (100) assembled to the second part (200),
a body portion (4) intended to be inserted into the first part (100), the body portion (4) comprising a welding surface (40) configured to be welded to the second part (200), the body portion (4) having a section smaller than that of the head portion (2), **characterized in that** the insert (1) comprises
thermal decoupling means extending around the body portion (4) to prevent a transmission of the heat generated by the body portion (4) to the first part (100) during the welding operation, the thermal decoupling means comprising a peripheral area or housing (44) intended to contain a heat-insulating material, the peripheral area or housing (44) being delimited by one or several element(s) (46) projecting from the underside of the head portion (2), and the insert (1) comprises holding means configured to hold the insert (1) in position through the first part (100), the holding means comprising an outer side face (46b) of the projecting element(s) (46) intended to keep the body portion (4) at a distance from the first part (100) when the insert (1) is integrated with this first part (100).

2. The insert (1) according to claim 1, wherein an apex (46c) of the projecting element(s) (46) forms a cutting edge intended to cut the first part (100).

3. The insert (1) according to claim 2, wherein the welding surface (40) is configured to bear against the first part (100) before the cutting edge formed by the apex (46c).

4. The insert (1) according to any of claims 1 to 3, wherein the projecting element(s) (46) extends/extend at least up to the mid-height of the body portion (4).

5. The insert (1) according to any of claims 1 to 4, wherein the thermal decoupling means comprise a part of a heat-insulating material.

6. The insert (1) according to any of claims 1 to 5, wherein the thermal decoupling means comprise a coating of a heat-insulating material.

7. The insert (1) according to any of claims 1 to 6, wherein the head portion (2) comprises at least one vent conduit (30).

8. The insert (1) according to any of claims 1 to 7, wherein the body portion (4) comprises a portion (41) with a reduced section towards the welding surface (40).

9. The insert (1) according to any of claims 1 to 8, wherein the insert (1) comprises fixing means configured to allow fixing on the insert (1) of a component intended to cooperate with said fixing means.

10. The insert (1) according to any of claims 1 to 9, wherein the head portion (2) comprises a first material and the body portion (4) comprises a second material distinct from the first material.

11. The insert (1) according to any of the preceding claims, wherein the bearing surface (22) has a peripheral flange (21, 220) intended to bear against the first part (100).

12. A method for assembling a first part (100) and a second part (200), the assembly method comprising the steps of:
integrating an insert (1) according to any of claims 1 to 11 in the first part (100),
welding the insert (1) on the second part (200).
